# EUROPEAN PATENT SPECIFICATION

(11) **EP 4 391 127 B1**
(45) Date of publication and mention of the grant of the patent: **08.07.2026**
(21) Application number: 21954339.4
(22) Date of filing: 12.10.2021
(51) Int. Cl.: H01M 10/04, H01M 10/0585, B65H 45/10

(54) **SECONDARY CELL STACKING APPARATUS**
VORRICHTUNG ZUM STAPELN SEKUNDÄRER ZELLEN
APPAREIL D'EMPILEMENT DE CELLULES SECONDAIRES

(30) Priority: 19.08.2021 KR 20210109372
(43) Date of publication of application: 26.06.2024
(73) Proprietor: LG Electronics Inc., Yeongdeungpo-gu Seoul, 07336 (KR)
(72) Inventor: BANG, Chunseok, Seoul 06772 (KR); KIM, Yongseong, Seoul 06772 (KR); KIM, Sungchul, Seoul 06772 (KR); JI, Daeyoung, Seoul 06772 (KR); LEE, Seongmin, Seoul 06772 (KR)
(74) Representative: Mooser, Sebastian Thomas
(86) International application number: PCT/KR2021/013961
(87) International publication number: WO 2023/022293

(56) References cited:
- JP-A- 2014 165 055
- JP-A- 2017 016 946
- KR-A- 20200 089 452
- KR-A- 20200 089 452
- KR-A- 20210 031 152
- KR-A- 20210 031 152
- KR-B1- 101 959 082
- US-A1- 2006 051 652
- US-A1- 2018 170 705
- US-A1- 2022 069 332

## Description

### [Technical Field]

The present disclosure relates to an apparatus for stacking a rechargeable battery.

### [Background Art]

A rechargeable battery is a device which converts electrical energy into chemical energy, stores the chemical energy, and generates electricity if necessary. Both a charging operation and a discharging operation are performed through one electrode, and an oxidation electrode (an anode; negative electrode) and a reduction electrode (a cathode; a positive electrode) are distinguished therebetween based on a discharging reaction.

The rechargeable battery includes a cathode plate and an anode plate coated with active materials on current collectors, a separator to separate the cathode plate from the anode plate, an electrolyte to transfer an ion through the separator, a case to receive, the cathode plate, the separator, and the anode plate, and a lead tab connected to the cathode plate and the anode plate and protruding out.

Rechargeable batteries may be classified into a cylinder type, a prismatic type, and a pouch type depending on the shapes thereof.

The pouch-type rechargeable battery may include a case, such as a pouch, having a flexible property. Accordingly, the pouch-type rechargeable battery may have a more free shape. In addition, the pouch-type rechargeable battery may be easily manufactured, and may have a lower manufacturing cost. Accordingly, the pouch-type rechargeable battery has been extensively used in a rechargeable battery field.

As one example of an apparatus for manufacturing the rechargeable battery, there is a folding apparatus of an electrode assembly disclosed in Korean Patent Registration No. 10-1262034 B1 (published on May 08, 2013). The folding apparatus of the electrode assembly is to manufacture a stack/folding-type electrode assembly, in which unit cells are sequentially stacked while a separation film is interposed between the unit cells. The folding apparatus includes: a web supply unit to supply a web in which a plate-type unit cells are arranged at specific distances; a winding jig to rotate the unit cells by holding the first unit cell of the web, such that the unit cells are sequentially stacked while the separation film is interposed between the unit cells; and a Y-directional rotation axis correcting unit to position-correct the rotation axis of the winding jig in a direction (the Y axis direction) perpendicular to the forward direction of the web. The Y-directional rotation axis correcting unit periodically changes the position of the rotation axis in the direction (Y axis) perpendicular to the forward direction (X axis) of the web such that the vertical amplitude of the web is minimized in the winding process, and the Y-axis position of the rotation axis is changed in a direction of cancelling the change in the position of the web, when the position of the web is changed in the vertical direction.

KR 20210031152 A discloses another apparatus for stacking a rechargeable battery.

### [Disclosure]

### [Technical Problem]

The present embodiment provides an apparatus for stacking a rechargeable battery, capable of stacking cells with high precision while minimizing wrinkles of a separator.

### [Technical Solution]

According to the present invention, an apparatus for stacking a rechargeable battery to manufacture a stack cell including a positive electrode and a negative electrode alternately disposed while a separator is interposed between the positive electrode and the negative electrode according to claim 1 is presented.

The forming machine may have first cylinder to move the first forming machine in a direction perpendicular to the moving direction of the separator; and a second cylinder to move the second forming machine in a direction perpendicular to the moving direction of the separator.

The apparatus for stacking the rechargeable battery may further include a cathode align table on which the positive electrode is placed, an anode align table on which a negative electrode is placed, and a stacking table moving mechanism.

The stacking table moving mechanism may alternately perform a first operation of moving the stacking table from a first position to a second position and a second operation of moving the stacking table from the second position to the first position.

The first position may be closer to the anode align table of the cathode align table and the anode align table.

The second position may be closer to the cathode align table of the cathode align table and the anode align table.

In the first operation and the second operation, the feeding roller may be driven.

The feeding roller may be disposed above a space between the first position and the second position.

The apparatus for stacking the rechargeable battery may further include a lower lifting mechanism to lift the stacked table.

The lower elevating mechanism may move down the stacking table by the sum of the thickness of the positive electrode or the negative electrode and the thickness of the separator.

The apparatus for stacking the rechargeable battery may further include an upper lifting mechanism to lift a forming machine and a feeding roller.

### [Advantageous Effects]

According to the present invention, since the separator is pre-formed by the forming machine, the generation of wrinkles in the line formed on the separator of the stack cell may be minimized.

In addition, as the feeding roller is interposed between the first position and the second position, the separator may be bent by the feeding roller. Accordingly, the guide roller needs not additionally to be provided between the feeding roller and the stacking table. Accordingly, the structure may be simplified.

In addition, since the stack table may be lifted by the lower lifting mechanism, when the height of the stack cell is increased, the height of the forming machine or the feeding roller needs not to be adjusted.

### [Description of Drawings]

FIG. 1 is a plan view illustrating a stack cell of a rechargeable battery, which can be obtained with the apparatus of the present invention.
FIG. 2 is a cross-sectional view illustrating a stack cell of a rechargeable battery, which can be obtained with the apparatus of the present invention.
FIG. 3 is a plan view illustrating that wrinkles are generated in a separator during the manufacturing of a stack cell of a rechargeable battery.
FIG. 4 is a view illustrating an apparatus for stacking a rechargeable battery according to an embodiment of the present invention.
FIG. 5 is a view that a second robot illustrated in FIG. 4 moves a negative electrode a separator on a stacking table.
FIG. 6 is a view illustrating that a second robot illustrated in FIG. 5 returns to an anode magazine.
FIG. 7 is a view illustrating that a forming machine illustrated in FIG. 6 forms a separator.
FIG. 8 is a view illustrating that a stacking table illustrated in FIG. 7 is moved from a first position to a second position, and a feeding roller feeds a separator.
FIG. 9 is a view illustrating that a first robot illustrated in FIG. 8 moves a positive electrode to a separator on a stacking table, and the forming machine illustrated in FIG. 8 forms the separator.
FIG. 10 is a view illustrating that a first robot illustrated in FIG. 8 returns to a positive electrode magazine.
FIG. 11 is a view illustrating that a stacking table illustrated in FIG. 10 is moved from a second position to a first position, and a feeding roller feeds a separator.
FIG. 12 is a conceptual view illustrating a process of forming a stack cell after a separator is formed by a forming machine in an apparatus according to an embodiment of the present invention.

### [Best Mode]

### [Mode for Invention]

Hereinafter, a detailed embodiment of the present invention will be described in detail with reference to the drawings.

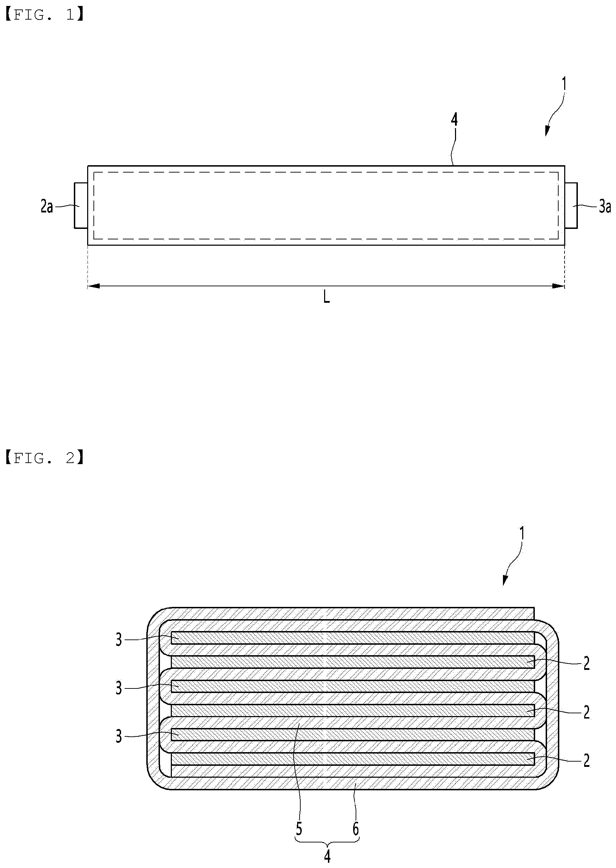

FIG. 1 is a plan view illustrating a stack cell of a rechargeable battery which can be obtained with an apparatus according to the present invention and FIG. 2 is a cross-sectional view illustrating a stack cell of a rechargeable battery which can be obtained with an apparatus according to the present invention.

In a stack cell 1 illustrated in FIGS. 1 and 2, a positive electrode 2 and a negative electrode 3 may be partitioned into each other through a separator 4, and may be alternately disposed while the separator 4 is interposed between the positive electrode 2 and the negative electrode 3.

A cathode tap 2a may be attached to the positive electrode 2, and an anode tap 3a may be attached to the negative electrode 3.

The positive electrode 2 may be a first electrode, and the negative electrode 3 may be a second electrode.

The separator 4 may be disposed to surround the positive electrode 2 and the negative electrode 3, or may be disposed without surrounding the cathode tap 2a and the anode tap 3a.

The separator 4 may be divided into an inner separator 5 and an outer separator 6 depending on the position of the separator 4.

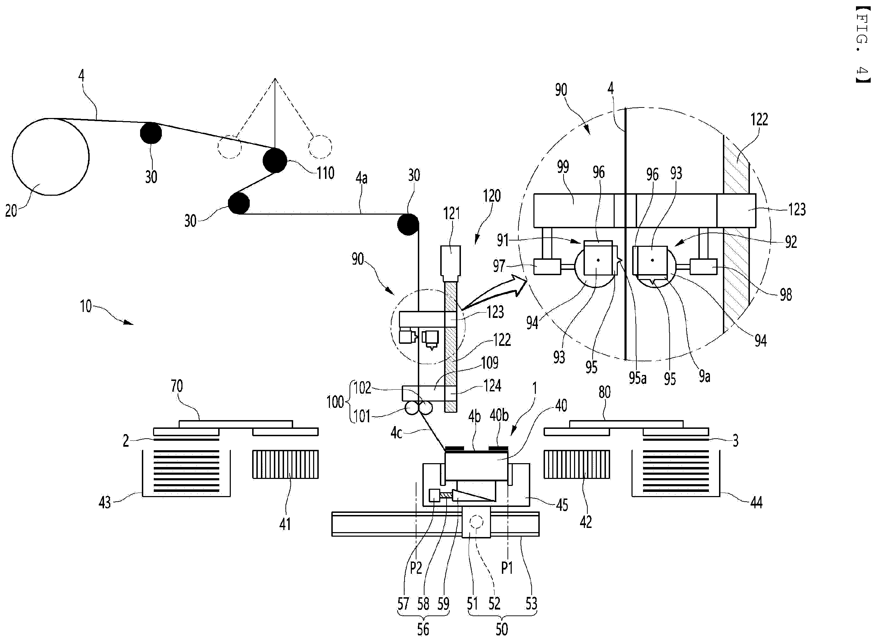

The inner separator 5 may be defined as a portion of the separator 4, which is positioned inside the outer separator 6, and may be folded substantially in a zigzag form, when the stack cell 1 is completed by the apparatus 10 for stacking the rechargeable battery (see FIG. 4).

The outer separator 6 may be a portion extending from one end of the inner separator 5, and may be defined as a portion surrounding both the inner separator 5, the plurality of positive electrodes 2, and the plurality of negative electrode 3.

The stack cell 1 may have tended to be gradually enlarged, may have a length L which is lower. For example, the stack cell may have the length L in the range of 500 mm to 600 mm.

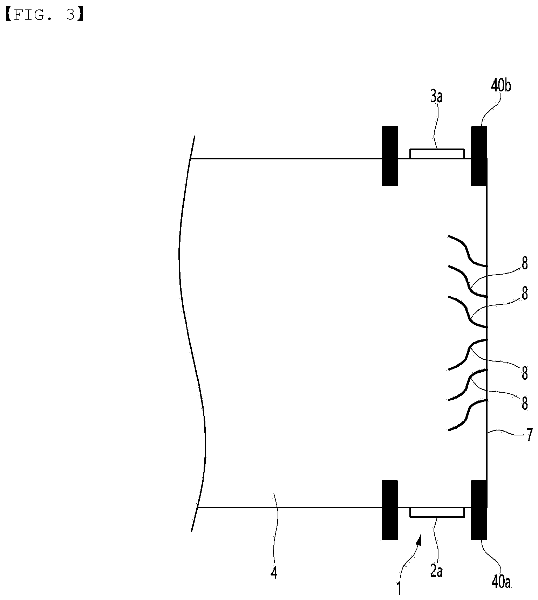

The stack cell 1 may be assembled by the apparatus 10 for stacking the rechargeable battery as illustrated in FIGS. 3 to 11.

The separator 4, the positive electrode 2, and the negative electrode 3, respectively, may be inserted into the apparatus 10 for stacking the rechargeable battery after being completely manufactured, and the apparatus 10 for stacking the rechargeable battery may stack the positive electrode 2, the separator 4, and the negative electrode 3. The apparatus 10 for stacking the rechargeable battery may manufacture the stack cell 1 in which the positive electrode 2 and the negative electrode 3 are alternately arranged while the separator 4 is between the positive electrode 2 and the negative electrode 3.

Hereinafter, the apparatus 10 for stacking the rechargeable battery for assembling the stack cell 1 will be described.

The apparatus 10 for stacking the rechargeable battery may be a Z-Stacking device to supply the separator 4 to be folded in a zigzag form, while alternately arranging the positive electrode 2 and the negative electrode 3 with the separator interposed therebetween.

FIG. 3 is a plan view illustrating that wrinkles are generated in the separator during the manufacturing of a stack cell of the rechargeable battery.

The apparatus 10 for stacking the rechargeable battery may cover the electrode 2 or 3 positioned on a stacking table 40 (see FIG. 4) with the separator 4, and may place mandrels 40a and 40b on a top surface of the separator 4 to fold the separator 4.

When the separators 4 and the electrodes 2 and 3 are stacked in the Z-Stacking method using the mandrels 40a and 40b, the mandrels 40a and 40b fails to hold the entire top surface of the separator 4, when the separator 4 is folded, the wrinkles 8 may be made at the center of a line 7 of the separator 4. In this case, the wrinkles 8 may not be nice, but failed.

When the mandrels 40a and 40b having a larger size folds the separator 4 while holding the entire top surface of the separator 4, the length of the mandrels 40a and 40b holding the separator 4 should be increased and even the width of the mandrels 40a and 40b should be increased. When the mandrels 40a and 40b increased in length and width stack a next cell, the mandrels 40a and 40b should be avoided above the separator 4, which makes a limitation in production at a higher speed.

It is preferable that the apparatus 10 for stacking the rechargeable battery according to the embodiment rapidly manufactures the stack cell 1 while minimizing the wrinkles 8 as described above.

FIG. 4 is a view illustrating an apparatus for stacking a rechargeable battery according to an embodiment of the present invention.

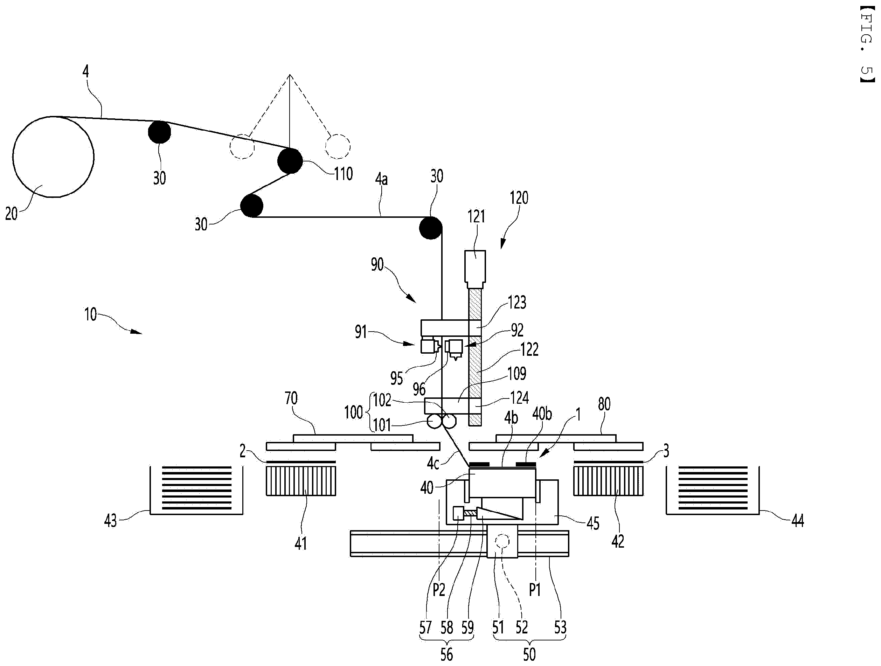

FIG. 5 is a view that a second robot illustrated in FIG. 4 moves a negative electrode the separator on the stacking table.

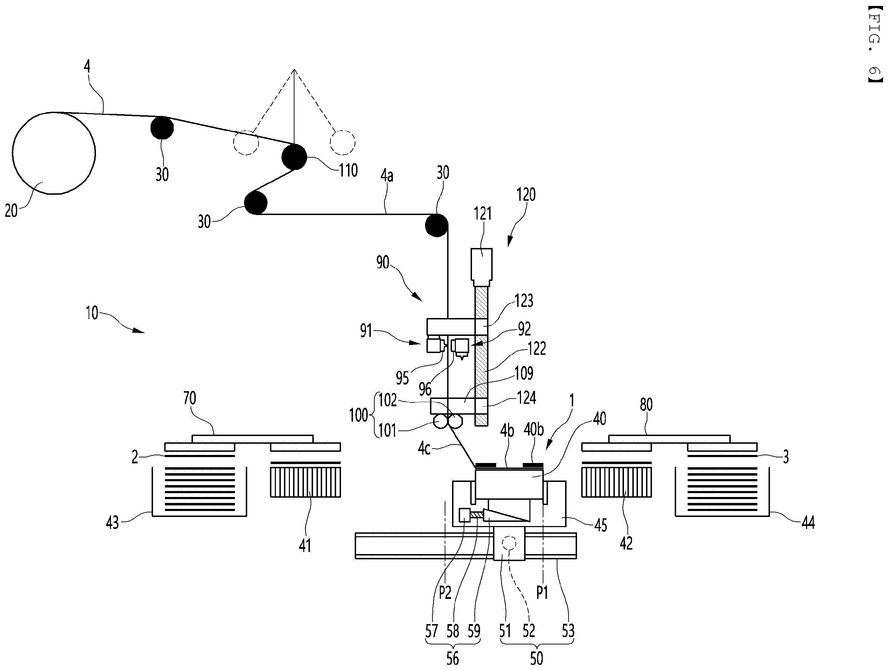

FIG. 6 is a view illustrating that a second robot illustrated in FIG. 5 returns to the anode magazine.

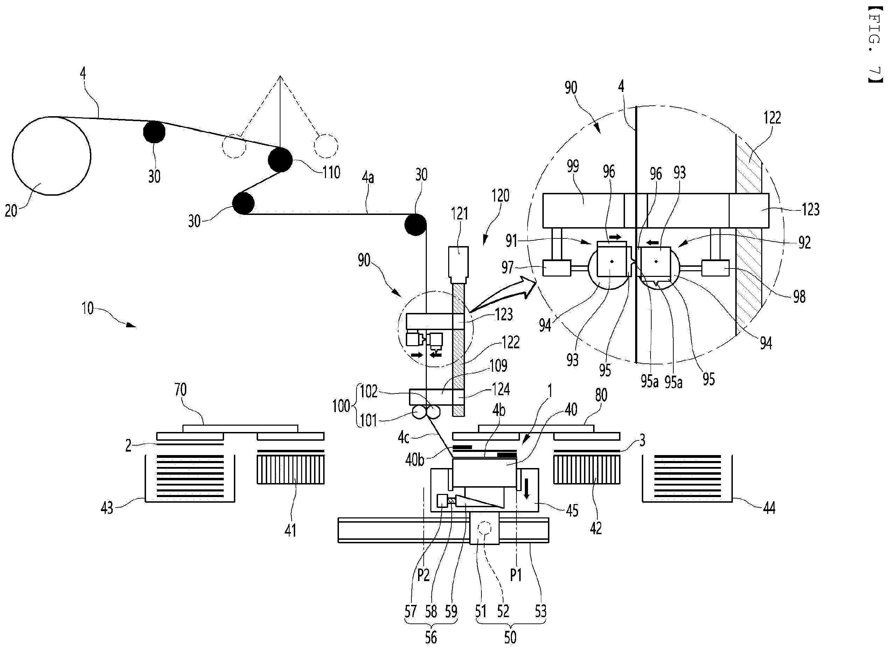

FIG. 7 is a view illustrating that a forming machine illustrated in FIG. 6 forms a separator.

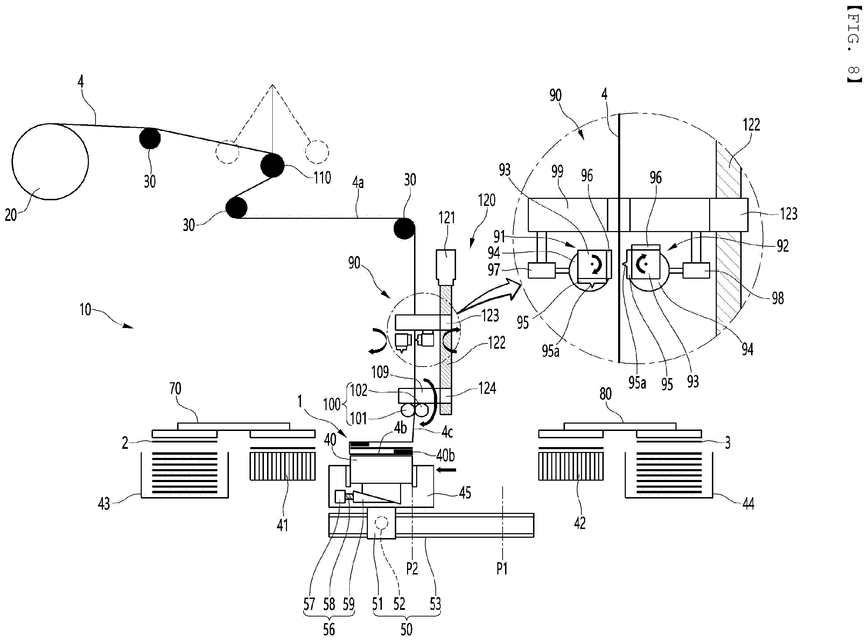

FIG. 8 is a view illustrating that a stacking table illustrated in FIG. 7 is moved from a first position to a second position, and the feeding roller feeds a separator.

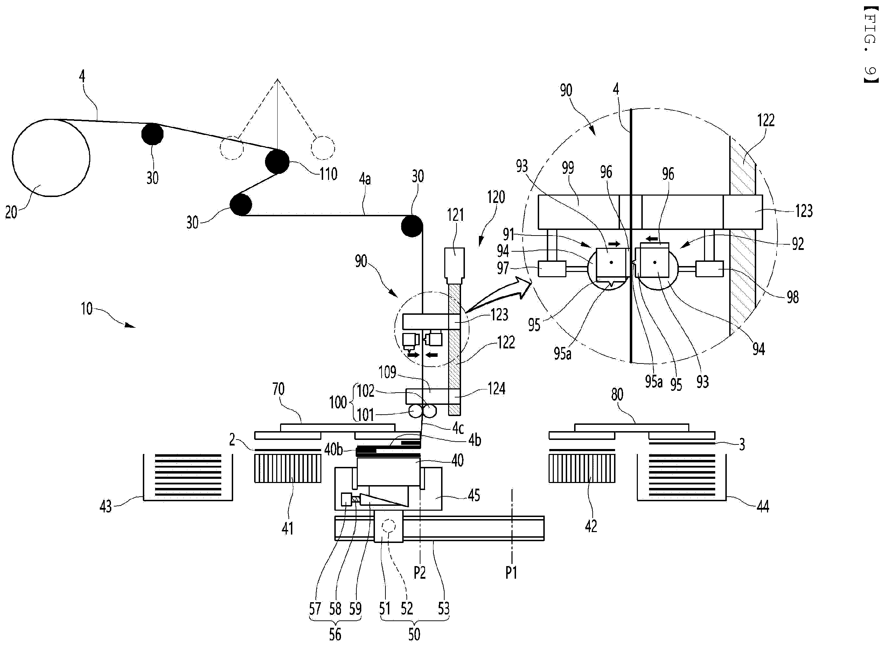

FIG. 9 is a view illustrating that a first robot illustrated in FIG. 8 moves a positive electrode to a separator on a stacking table, and the forming machine illustrated in FIG. 8 forms the separator.

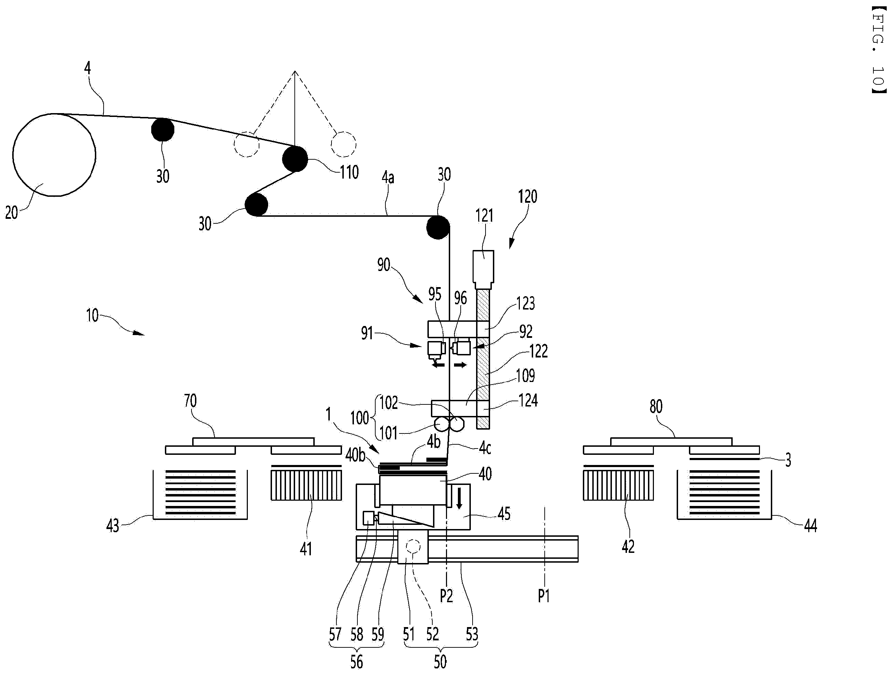

FIG. 10 is a view illustrating that a first robot illustrated in FIG. 8 returns to a positive electrode magazine.

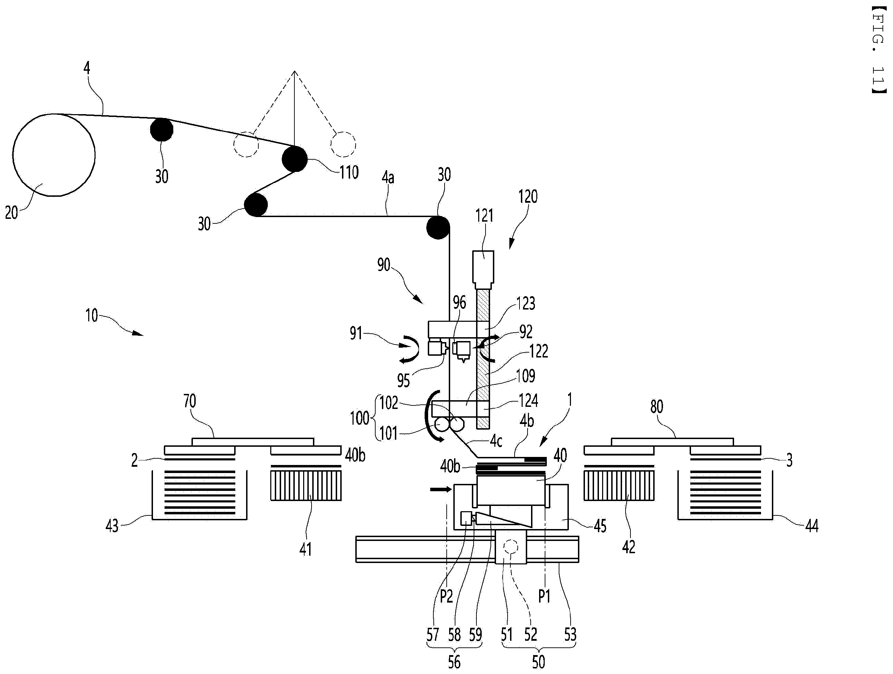

FIG. 11 is a view illustrating that a stacking table illustrated in FIG. 10 is moved from a second position to a first position, and a feeding roller feeds a separator.

The apparatus 10 for stacking the rechargeable battery may include an unwinder 20 to wind the separator 4 and to supply the separator 4, and at least one guide roller 30 to guide the separator 4.

When the unwinder 20 is stopped, the separator 4 may be maintained wounded. As the separator 4 rotates in a direction opposite to the winding direction, the separator 4 may release the separator 4.

The unwinder 20 may include a roller (or bobbin) on which the separator 4 is wound, and a roller rotating mechanism, such as a motor, to rotate the roller may be connected to the roller.

The guide roller 30 may be a roller to guide the separator 4 released by the unwinder 20. The guide roller 30 may be rotatably disposed. The guide roller 30 may guide the separator 4 such that the separator 4 is bent. The guide roller 30 may maintain the tension of the separator 4.

The guide roller 30 may form a moving path of the separator 4. A plurality of guide rollers 30 may be provided along a moving path of the separator 4.

The apparatus 10 for stacking the rechargeable battery includes the stacking table 40. The stack cell 1 constituting the rechargeable battery may be manufactured on the stacking table 40. The stacking table 40 may be a stack cell stage in which the stack cell 1 is manufactured.

The positive electrode 2, the negative electrode 3, and the separator 4 constituting the stack cell 1 may be disposed on the stacking table 40, such that the positive electrode 2 and the negative electrode 3 may be alternately disposed while the separator 4 is interposed between the positive electrode 2 and the negative electrode 3.

A cathode align table 41 and an anode align table 42 may be disposed around the stacking table 40.

The positive electrode 2 may be placed on the cathode align table 41.

The negative electrode 3 may be placed on the anode align table 42.

The cathode align table 41 and the anode align table 42 may be disposed to be spaced apart from each other while the stacking table 40 is interposed therebetween. A space for moving the stacking table 40 may be formed between the cathode align table 41 and the anode align table 42.

A cathode magazine 43, in which positive electrodes are stacked, may be disposed around the cathode align table 41. In addition, an anode magazine 44 in which negative electrodes are stacked may be disposed around the anode align table 42.

While the stack cell 1 is being manufactured, the separator 4 may be divided into an introducing part 4a, a stacking part 4b, and a feeding part 4c.

The introducing part 4a may be defined as a portion which is interposed positioned between the unwinder 20 and a feeding roller 100 on the moving path of the separator 4.

The stacking part 4b may be a portion of the separator 4, which is placed on the stacking table 40. The stacking part 4b may be defined as a portion placed on the stacking table 40 after being in the feeding part 4c before being placed on the stacking table 40.

The feeding part 4c may be a portion of the moving path of the separator 4, which is positioned between the introducing part 4a and the stacking part 4b. The feeding part 4c may be defined as a portion that has passed through the feeding roller 90 but is not yet placed on the stacking table 40.

The mandrels 40a and 40b, (see FIG. 3) may be positioned around the stacking table 40, and may enter the top surface of the stacking part 4b on the stacking table 40 to help the separator 4 to be folded. When a new stacking part 4b is stacked, the mandrels 40a and 40b are retracted and then reenter a top surface of the new stacking part 4b.

The mandrels 40a and 40b may repeatedly enter or retreat whenever the new stacking part 4b is stacked, and may help the separator 4 to be folded into a zigzag shape.

The stacking table 40 may be connected to a stacking table frame 45.

The apparatus 10 for stacking the rechargeable battery may further include a stacking table moving mechanism 50.

The stacking table moving mechanism 50 may be connected to the stacking table frame 45 to linearly move the stacking table frame 45 in a horizontal direction.

For example, the stacking table moving mechanism 50 may include a moving motor 51, a roller 52 connected to the moving motor 51 and rotated by the moving motor 51, and a guide rail 53 to guide movement of the roller 52.

The moving motor 51 may be mounted on the stacking table frame 45.

The guide rail 53 may be interposed between the cathode align table 41 and the anode align table 42 while horizontally extending.

The stacking table moving mechanism 50 may alternately perform a first operation and a second operation.

The first operation may be an operation of moving the stacking table 40 from a first position P1 to a second position P2, and the second operation may be an operation of moving the stacking table 40 from the second position P2 to the first position P1.

The first position P1 may be a position closer to the anode align table 42 of the cathode align table 41 and the anode align table 42.

The second position P2 may be a position closer to the cathode align table 41 of the cathode align table 41 and the anode align table 42.

The apparatus 10 for stacking the rechargeable battery may further include a lower lifting mechanism 56 to lift the stacking table 40.

The lower lifting mechanism 56 may move down the stacking table 40 by the sum (that is, the set height) of the thickness of any one of the positive electrode 2 and the negative electrode 3 and the thickness of the separator 4.

Whenever the new stacking part 4b is stacked on the stack cell 1, the lower lifting mechanism 56 may move down the stacking table 40 by the sum (that is, the set height) of the thickness of the positive electrode 2 and the thickness of the new stacking part 4b or may move down the stacking table 40 by the sum of the thickness of the anode electrode 3 and the thickness of the stacking part 4b.

When the stacking table 40 is moved down by the lower lifting mechanism 56, as the height of the stack cell 1 is increased, it is not necessary to adjust the height of the feeding roller 100 to be described later.

Before the stack cells 1 are stacked, the lower lifting mechanism 56 may lift the stacking table 40 to a reference height. While the stack cells 1 are stacked, the lower lifting mechanism 56 may lower the stacking table 40 by the set height.

For example, the lower lifting mechanism 56 may include a lower motor 57, a screw 58 connected to the rotor motor 57, and a lifter 58 linearly moved by the screw 58.

For example, the lower lifting mechanism 56 may include a lower motor 57, a screw 58 connected to the rotor motor 57, and a lifter 59 linearly moved by the screw 58.

The lower motor 57 may be installed in the stacking table frame 45.

The screw 58 may be formed to extend in a horizontal direction and may be rotated by the lower motor 57.

When the screw 58 is rotated, the lifter 59 may be linearly moved in the longitudinal direction of the screw 58.

The lifter 59 may have a female thread formed therein to be engaged with a male thread formed around the outer circumference of the screw 58. A lower gradient portion may be formed on the top surface of the lifter 59.

The lifter 59 may be linearly moved along a linear guide installed in the stacking table frame 45.

An upper gradient portion may be provided at a lower portion of the stacking table 40 to correspond to the lower gradient portion of the lifter 59. When the lower motor 57 drives to linearly move the lifter 59, the stacking table 40 may be lifted.

The apparatus 10 for stacking the rechargeable battery includes a first robot 70 and a second robot 80.

The first robot 80 may move the positive electrode 2 of the cathode magazine 43 to the cathode align table 41. The first robot 70 places the positive electrode 2 on the separator 4 supplied onto the stacking table 40.

The first robot 70 may move the positive electrode 2 onto the stacking table 40 and then place the positive electrode 2 on the separator 4 on the stacking table 40.

The first robot 70 may move the positive electrode 2 on the cathode align table 41 onto the stacking table 40, and may move the positive electrode 2 onto the stacking part 4b placed on the stacking table 40.

The second robot 80 may move the negative electrode 3 of the anode magazine 44 to the anode align table 42. The second robot 80 places the negative electrode 3 on the separator 4 supplied onto the stacking table 40.

The second robot 80 may move the negative electrode 3 onto the stacking table 40, and then place the negative electrode 3 on the separator 4 on the stacking table 40.

The second robot 80 may move the negative electrode 3 of the anode align table 43 onto the stacking table 40, and may move the negative electrode 3 onto the stacking part 4b placed on the stacking table 40.

The apparatus 10 for stacking the rechargeable battery includes the forming machine 90. The forming machine 90 forms the separator 4. The forming machine 90 may be disposed before the feeding roller 100 on the moving path of the separator 4.

The forming machine 90 includes a first forming machine 91 and a second forming machine 92.

The first forming machine 91 is disposed next to one surface of the separator 4.

The second forming machine 92 is disposed next to an opposite surface of the separator 4.

Each of the first forming machine 91 and the second forming machine 92 includes a rotating body 93, a motor 94 to rotate the rotating body 93, a forming body 95 disposed on one surface of the rotating body 93 and having a protruding part 95a, and a seating body 96 disposed on an another surface of the rotating body 93.

The rotating body 93 may have a polygonal shape, for example, a rectangular shape.

The forming body 95 and the seating body 96 may be provided on different surfaces of the rotating body 93 having the polygonal shape.

The forming machine 90 may further include a first cylinder 97 and a second cylinder 98.

The first cylinder 97 may move the first forming machine 91 in a direction perpendicular to the moving direction of the separator 4. The first cylinder 97 may linearly move the motor 94 of the first forming machine 91, and the rotating body 93 of the first forming machine 91 may move together with the motor 94. The first cylinder 97 may be directly connected to the motor 94 of the first forming machine 91 or may be connected to the motor 94 through a separate motor mount.

The second cylinder 98 may move the second forming machine 92 in a direction perpendicular to the moving direction of the separator 4. The first cylinder 97 may linearly move the motor 94 of the second forming machine 92, and the rotating body 93 of the second forming machine 92 may move together with the motor 94. The first cylinder 97 may be directly connected to the motor 94 of the first forming machine 91 or may be connected to the motor 94 through a separate motor mount.

The separator 4, especially, the introducing part 4a, may pass between the first forming machine 91 and the second forming machine 92 in a vertical direction, the first cylinder 97 may move the rotating body 93 of the first forming machine 91 in a horizontal direction, and the second cylinder 98 may move the rotating body 93 of the second forming machine 92.

The first cylinder 97 and the second cylinder 98 may be formed of a hydraulic cylinder or a pneumatic cylinder, and may be a mechanical cylinder having a screw embedded therein and a motor connected thereto.

The forming machine 90 may further include a forming machine body 99 on which the first cylinder 97 and the second cylinder 98 are mounted. The forming machine body 99 may be connected to an upper lifting mechanism 120 to be described later, particularly a forming machine carrier 123.

The forming machine 90 performs a first mode and a second mode.

As illustrated in FIG. 7, the first mode is a mode in which the forming body 95 of the first forming machine 91 and the seating body 96 of the second forming machine 92 face the separator 4, and the forming body 95 of the first forming machine 91 makes contact with the separator 4.

As illustrated in FIG. 9, the second mode is a mode in which the seating body 96 of the first forming machine 91 and the forming body 95 of the second forming machine 92 face the separator 4 and the forming body 95 of the second forming machine 92 makes contact with the separator 4.

The apparatus 10 for stacking the rechargeable battery includes a feeding roller 100.

The feeding roller 100 tension cuts the separator 4.

The feeding roller 100 may include a pair of rollers making contact with the separator 4. The feeding roller 100 may include a driving mechanism such as a motor that rotates at least one of a pair of rollers.

The separator 4 has tensions different from each other in a portion positioned before the feeding roller 100 and a portion positioned after the feeding roller 100. As described above, the tension of the separator 4 is varied before and after the feeding roller 100, which is defined as Tension Cut.

The feeding roller 100 may supply the separator 4 onto the stacking table 40. The feeding roller 100 may a required amount of separators 4 in each driving. For example, the feeding roller 100 may be driven during a set time, and a required amount of separator may be supplied, when the feeding roller 100 is driven.

The feeding roller 100 may supply the separator 4, which is formed by the forming machine 90, onto the stacking table 40.

The feeding roller 100 may forcibly push the feeding part 4c of the separator 4 to the stack cell 1, when the stacking table 4 moves, and may cut a tension acting on the separator 4 to prevent damage to the separator 4 when the tension excessive acts on the separator 4.

The feeding roller 100 may include a pair of rollers 101 and 102, any one of the pair of rollers 101 and 102 may make contact with one surface of the separator 4, and another of the pair of rollers 101 and 102 may make contact with an opposite surface of the separator 4.

The pair of rollers 101 and 102 may rotate in opposite directions, and a portion of the separator 4, which is positioned between the pair of rollers 101 and 102, may be forcibly pushed by the pair of rollers 101 and 102.

The feeding roller 100 may further include a feeding roller body 109 on which the pair of rollers 101 and 102 are supported. The feeding roller body 109 may be particularly connected to a feeding roller carrier 124 by the upper lifting mechanism 120 to be described later.

The feeding roller 100 may minimize expansion due to tension of the separator 4, and may push the separator 4 in the same direction as the driving direction of the separator 4.

The feeding roller 100 may forcefully push the separator 4 to minimize shaking or tearing of the separator 4. When the feeding roller 100 is driven, the feeding part 4c, which is positioned between the feeding roller 100 and the stack cell 1, may be temporarily loosened, thereby reducing the tension acting on the separator 4.

It is preferable that the feeding roller 100 is disposed to be close to the stacking table 4 on the moving path of the separator 4. It is preferable that the feeding roller 100 is disposed above the moving paths (P1→P2; P2-P1) of the stacking table 4, and supplies the separator 4 substantially above the stacking table 4.

The feeding roller 100 may be disposed between the first position P1 and the second position P2.

The feeding roller 100 may cut the tension of the separator 4 at a position close to the stacking table 4.

When the stacking table 4 is positioned at the first position P1, the feeding roller 100 may be positioned at the left-upper portion of the stacking table 4 as illustrated in FIGS. 5 to 7. In this case, the feeding part 4c connected to the stacking part 4b in the cell stack 1 on the stacking table 40 may be inclined between the feeding roller 100 and the cell stack 1, and may be bent to be inclined at a specific angle with respect to the feeding roller 100.

As illustrated in FIG. 8, when the stacking table 4 is moved from the first position P1 to the second position P2 and is positioned at the second position P2, the feeding roller 100 may be positioned above or at a left-upper portion of the stacking table 4 as illustrated in FIGS. 9 and 10. In this case, the feeding part 4c connected to the stacking part 4b in the cell stack 1 on the stacking table 40 may be inclined between the feeding roller 100 and the cell stack 1, and may be bent to be inclined at a specific angle with respect to the feeding roller 100.

When the feeding roller 100 is positioned before the forming machine 90 on the moving path of the separator 4, a guide roller to guide the separator to be bent at a specific angle may be required between the forming machine 90 and the stack cell 1. When the feeding roller 100 is interposed between the forming machine 90 and the stack cell 1, the guide roller is not separately required, and the structure of the apparatus 10 for stacking the rechargeable battery may be simplified.

When the feeding roller 100 is not positioned before the forming machine 90 on the moving path of the separator 4, the guide roller to guide the separator to be bent at the specific angle may be required between the forming machine 90 and the stack cell 1. When the feeding roller 100 is interposed between the first position P1 and the second position P2 as described above, the guide roller is not separately required, and the structure of the apparatus 10 for stacking the rechargeable battery may be simplified.

In other words, it is preferable that the optimal position of the feeding roller 100 is between the forming machine 90 and the stack cell 1 on the moving path of the separator 4, and is above on the moving path of the separator 4 between the first position P1 and the second position P2.

While the stack cell 1 is being manufactured, the feeding roller 100 may not be continuously driven (on), but may alternately perform a driving (on) operation and a stopping (off) operation.

The feeding roller 100 may travel on the separator 4 by a specific amount .

When the stack cell 1 is realized in a larger size, even the separator 4 may be realized in a larger size, and the feeding roller 100 may be installed to correspond to the larger-size separator 4.

The feeding roller 100 may temporarily prevent a larger load (or tension) from being applied to the feeding part 4c, which is positioned after the feeding roller 100, of the separator 4, and may be stopped (off), when the load of the separator 4 is small, such that the separator 4 is maintained to have a tension in a specific range.

It is preferable that the feeding roller 100 is driven (on) only when a load acting on the separator 4 is large, thereby temporarily lowering the tension of the separator 4.

The feeding roller 100 may be driven when the stacking table moving mechanism 50 is in a first operation and a second operation.

As illustrated in FIG. 8, the feeding roller 100 may be driven while the stacking table 40 is moved from the first position P1 to the second position P2, such that the separator 4 is fed to the stack cell 1. In addition, while the stack table 40 is moved from the first position P1 to the second position P2, a load may not be largely applied to the separator 4.

As illustrated in FIG. 10, the feeding roller 100 may be driven while the stacking table 40 is moved from the second position P2 to the first position P1, such that the separator 4 is fed to the stack cell 1. In addition, while the stack table 40 is moved from the second position P2 to the first position P1, a load may not be largely applied to the separator 4.

The apparatus for stacking the rechargeable battery may further include the upper lifting mechanism 120.

The upper lifting mechanism 120 may lift the forming machine 90 and the feeding roller 100.

The upper elevating mechanism 120 may further include a motor 121, a screw 122 rotated by the motor 121, the forming machine carrier 123 lifted in the longitudinal direction of the screw 122 along the screw 122 when the screw 122 is rotated, and the feeding roller carrier 124 lifted in the longitudinal direction of the screw 122 along the screw 122 when the screw 122 is rotated.

The forming machine carrier 123 and the feeding roller carrier 124 may be spaced apart from each other in the vertical direction, and may simultaneously be moved up and down, when the screw 122 is rotated.

It is preferable that the upper lifting mechanism 120 prevents the feeding roller 100 from interfering with the stacking table 40 or the stack cell 1 when the stacking table 40 moves.

As illustrated in FIG. 8, the upper lifting mechanism 120 may be driven while the stacking table 40 is moved from the first position P1 to the second position P2 to move up the feeding roller 100. The upper lifting mechanism 120 may move up the feeding roller 100 before the stacking table 40 or the stack cell 1 reaches the feeding roller 100.

As illustrated in FIG. 10, the upper lifting mechanism 120 may be driven while the stacking table 40 is moved from the second position P2 to the first position P1, or may be driven after the stacking table 40 is completely moved to the first position P1.

When the stacking table 40 or the stack cell 1 is positioned below the right side of the feeding roller 100, the upper lifting mechanism 120 may preferably be driven, and the feeding roller 100 may be lowered.

The apparatus 10 for stacking the rechargeable battery may further include a dancer roller 130.

The dancer roller 130 may include a roller that moves along an arc-shaped trajectory with respect to a central axis, and the introducing part 4a of the separator 4 may be guided along the roller to maintain the tension.

The dancer roller 130 may be interposed between the guide roller 30 and the feeding roller 100 on the moving path of the separator 4 to maintain the tension of the separator 4.

The dancer roller 130 may be disposed between the guide roller 30 and the forming machine 90 on the moving path of the separator 4 to maintain the tension of the separator 4.

Hereinafter, the operation of the apparatus 10 for stacking the rechargeable battery configured as described above will be described.

First, as illustrated in FIG. 4, the stacking table 40 may be positioned at the first position P1, and a portion of the separator 4 may be a stacking part 4b placed on the stacking table 40.

As illustrated in FIG. 5, the first robot 70 may move the positive electrode 2 in the cathode magazine 43 to the cathode align table 41. As illustrated in FIG. 5, the second robot 80 may move the negative electrode 3 in the anode magazine 44 to the anode align table 42.

Thereafter, as illustrated in FIG. 6, the first robot 70 may return to an upper portion of the cathode magazine 43, and the second robot 80 may return to an upper portion of the anode magazine 44.

As illustrated in FIG. 6, after the first robot 70 and the second robot 80 return, the second robot 80 may place the negative electrode 3, which is positioned on the anode align table 42, to an upper portion of the stacking table 40, in other words, the stacking part 4b, and may place the negative electrode 3 in the anode magazine 44 onto the negative align table 42, as illustrated in FIG. 7. The second robot 80 may return the negative electrode 3 to an upper portion of the anode magazine 44, after moving the negative electrode 3 to the stacking part 4b.

Meanwhile, as illustrated in FIG. 7, the stacking part 4b and the negative electrode 3 may be placed on the stacking table 40, and the lower lifting mechanism 56 may move down the stacking table 40 by a specific height (in other words, the sum of the thickness of the stacking part 4b and the thickness of the negative electrode 3) as illustrated in FIG. 7.

As illustrated in FIG. 7, the first cylinder 97 of the forming machine 90 linearly moves the rotating body 93 of the first forming machine 91 to be close to the rotating body 93 of the second forming machine 92, and the second cylinder 98 of the forming machine 90 linearly moves the rotating body 93 of the second forming machine 92 to be close to the rotating body 93 of the first forming machine 91. The forming body 95 of the first forming machine 91 and the seating body 96 of the second forming machine 92 may face each other, and a portion of the separator 4 positioned therebetween, particularly, the introducing part 4a, may be formed to the right.

When a portion of the separator 4 is formed, as illustrated in FIG. 8, the first cylinder 97 of the forming machine 90 linearly moves the rotating body 93 of the first forming machine 91, such that the rotating body 93 of the first forming machine 91 is away from the rotating body 91 of the second forming machine 92, and the second cylinder 98 of the forming machine 90 linearly moves the rotating body 93 of the second forming machine 92, such that the rotating body 93 of the second forming machine 92 is away from the rotating body 91 of the second forming machine 91. The forming body 95 of the first forming machine 91 and the seating body 96 of the second forming machine 92 may be spaced apart from each other.

The motor 94 of the first forming machine 91 rotates the rotating body 93 of the first forming machine 91 such that the seating body 96 of the first forming machine 91 faces the separator 4, and the motor 94 of the second forming machine 92 rotates the rotating body 93 of the second forming machine 92, such that the forming body 95 of the second forming machine 92 faces the separator 4.

Meanwhile, as illustrated in FIG. 8, the stacking table moving mechanism 50 may move the stacking table 40 to the second position P2, and the feeding roller 100 may supply the separator 4 to minimize a tension of the separator 4 (particularly, the tension of the feeding part 4c), which may occur when the stacking table 40 moves.

Meanwhile, the upper lifting mechanism 120 may move up the forming machine 90 and the feeding roller 100, before the stacking table 40 reaches the lower side of the feeding roller 100, and interference between the feeding roller 100 and the stack cell 1 is minimized when the stacking table 40 moves.

When the stacking table 40 is completely moved to the second position P2, as illustrated in FIG. 9, the first robot 70 may place the positive electrode 2, which is positioned on the cathode align table 41, to the upper portion (the stacking part 4b) of the stacking table 40, and may place the positive electrode 2, which is positioned in the cathode magazine 43, on the cathode align table 41. The first robot 780 may return to the upper portion of the cathode magazine 43, after lifting the positive electrode 2.

Meanwhile, as illustrated in FIG. 9, in the forming machine 90, the first cylinder 97 of the forming machine 90 linearly moves the rotating body 93 of the first forming machine 91 to be close to the rotating body 93 of the second forming machine 92, and the second cylinder 98 of the forming machine 90 linearly moves the rotating body 93 of the second forming device 92 to be close to the rotating body 93 of the first forming machine 91. The seating body 96 of the first forming machine 91 and the forming body 95 of the second forming machine 92 may face each other, and a portion (particularly, the introducing part 4a) of the separator 4, which is positioned therebetween may be formed to the left.

In addition, as illustrated in FIG. 10, when a portion of the separator 4 is formed, the first cylinder 97 of the forming machine 90 linearly moves away from the rotating body 93 of the first forming machine 91 such that that the rotating body 93 of the first forming machine 91 is away from the rotating body 93 of the second forming machine 92. The second cylinder 98 of the forming machine 90 linearly moves away from the rotating body 93 of the second forming machine 92 such that that the rotating body 93 of the second forming machine 92 is away from the rotating body 93 of the first forming machine 91. Accordingly, the seating body 96 of the first forming machine 91 and the forming body 95 of the second forming machine 92 may be spaced apart from the separator 4.

Meanwhile, as illustrated in FIG. 10, the stacking part 4b and the positive electrode 3 may be placed on the stacking table 40, and the lower lifting mechanism 56 may move down the stacking table 40 by a specific height (in other words, the sum of the thickness of the stacking part 4b and the thickness of the positive electrode 3) as illustrated in FIG. 10.

When the stacking table 40 is completely moved down, the stacking table moving mechanism 50 may move the stacking table 40 from the second position P2 to the first position P2, as illustrated in FIG. 11.

The motor 94 of the first forming machine 91 rotates the rotating body 93 of the first forming machine 91, such that the forming body 95 of the first forming machine 91 faces the separator 4, and the motor 94 of the second forming machine 92 rotates the rotating body 93 of the second forming machine 92, such that the seating body 96 of the second forming machine 92 faces the separator 4.

When the stacking table 40 is moved, the feeding roller 100 supplies the separator 4 to minimize the tension of the separator 4, particularly the feeding part 4c, which may occur when the stacking table 40 is moved.

Meanwhile, when the stacking table 40 is moved to the right-lower portion of the feeding roller 100, the upper lifting mechanism 120 may move down the forming machine 90 and the feeding roller 100.

When the stacking table 40 is completely moved to the second position P2, one cycle is completed, in which the negative electrode 3 and the positive electrode 2 are stacked while the separator 4 is interposed between the negative electrode 3 and the positive electrode 2, and the apparatus 10 for stacking the rechargeable battery may repeat the cycle as illustrated in FIGS. 4 to 11.

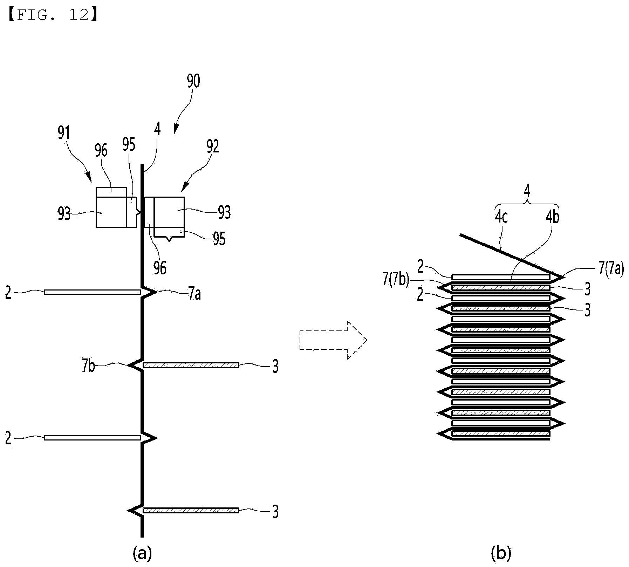

FIG. 12 is a conceptual view illustrating a process of forming a stack cell 1 after a separator according to the present embodiment is formed by a forming machine.

The forming machine 90 may form portions 7a and 7b of the separator 4 in advance, as illustrated in FIG. 12A, and may hold the line 7 of the separator 4 as illustrated in FIG. 12B to minimize the wrinkles 8 (see FIG. 3) as illustrated in FIG. 3.

The forming machine 90 may form a right forming part 7a protruding rightward from the separator 4, when the forming body 95 of the first forming machine 90 faces the seating body 96 of the second forming machine 90, and when the forming body 95 of the first forming machine 90 and the seating body 96 of the second forming machine 90 are pressed by the separator 4.

When the stack cells 1 are stacked as illustrated in reference numeral 'b' of FIG. 12, the right forming part 7a may form a line 7 positioned on the right side of the separator 4, in other words, a right line.

The forming machine 90 may form a left forming part 7b protruding leftward from the separator 4, when the forming body 95 of the second forming machine 90 faces the seating body 96 of the first forming machine 90, and when the forming body 95 of the second forming machine 90 and the seating body 96 of the first forming machine 90 are pressed by the separator 4.

When the stack cells 1 are stacked as illustrated in reference numeral 'b' of FIG. 12, the left forming part 7b may form a line 7, which is positioned on the left side of the separator 4, in other words, a left line.

The forming machine 90 may guide the stacking part 4b to be folded at both sides of the stack cell 1 by holding the line 7 of the separator 4, which is to be folded, in advance, and the occurrence of wrinkles at the line 7 of the separator 4 may be improved.

The above description is merely an example of an embodiment of the invention, the scope of the invention being defined by the appended claims.

## Claims

1. An apparatus for stacking a rechargeable battery to manufacture a stack cell including a positive electrode and a negative electrode alternately disposed while a separator (4) is interposed between the positive electrode (2) and the negative electrode (3), the apparatus comprising:
a stacking table (40);
a forming machine (90) to form the separator;
a feeding roller (100) to tension-cut the separator formed by the forming machine and to supply a required amount of separators onto the stacking table;
a first robot (70) to place the positive electrode onto the separator supplied on the stacking table; and
a second robot (80) to place the negative electrode onto the separator supplied on the stacking table,
wherein a tension of the separator is varied before and after the feeding roller, which is defined as tension-cut,
wherein the forming machine includes:
a first forming machine (91)
disposed next to one surface of the separator; and
a second forming machine (92) disposed next to an opposite surface of the separator,
wherein each of the first and second forming machines includes:
a rotating body (93);
a motor (94) to rotate the rotating body;
a forming body (95) disposed on one surface of the rotating body and having a protrusion (95a) formed thereon; and
a seating body (96) disposed on another surface of the rotating body,
wherein the forming machine performs a first mode, in which the forming body of the first forming machine and the seating body of the second forming machine face the separator, and the forming body of the first forming machine makes contact with the separator, and a second mode in which the seating body of the first forming machine and the forming body of the second forming machine face the separator, and the forming body of the second forming machine makes contact with the separator.

2. The apparatus of claim 1, wherein the forming machine includes:
a first cylinder (97)
to move the first forming machine in a direction perpendicular to a moving direction of the separator; and
a second cylinder (98) to move the second forming machine in a direction perpendicular to the moving direction of the separator.

3. The apparatus of claim 1, further comprising:
a cathode align table (41) on which the positive electrode is placed;
an anode align table (42) on which the negative electrode is placed; and
a stacking table moving mechanism (50) to alternately perform a first operation of moving the stacking table from a first position to a second position and a second operation of moving the stacking table from the second position to the first position,
wherein the first position is closer to the anode align table of the cathode align table and the anode align table, and
wherein the second position is closer to the cathode align table of the cathode align table and the anode align table.

4. The apparatus of claim 3, wherein the feeding roller is driven in the first operation and the second operation.

5. The apparatus of claim 3, wherein the feeding roller is disposed above a space between the first position and the second position.

6. The apparatus of claim 1, further comprising:
a lower lifting mechanism (56) to lift the stacked table.

7. The apparatus of claim 6, wherein the lower elevating mechanism moves down the stacking table by a sum of a thickness of the positive electrode or a thickness of the negative electrode and a thickness of the separator.

8. The apparatus of claim 1, further comprising:
an upper lifting mechanism (120) to lift the forming machine and the feeding roller.

## Patentansprüche

1. Vorrichtung zum Stapeln einer wiederaufladbaren Batterie zur Herstellung einer Stapelzelle, die eine positive Elektrode und eine negative Elektrode umfasst, die abwechselnd angeordnet sind, während ein Separator (4) zwischen der positiven Elektrode (2) und der negativen Elektrode (3) angeordnet ist,
wobei die Vorrichtung umfasst:
einen Stapeltisch (40);
eine Formmaschine (90) zum Formen des Separators;
eine Zuführwalze (100) zum Spannungsschneiden des von der Formmaschine geformten Separators und zum Zuführen einer erforderlichen Menge an Separatoren auf den Stapeltisch;
einen ersten Roboter (70) zum Auflegen der positiven Elektrode auf den auf den Stapeltisch zugeführten Separator; und
einen zweiten Roboter (80) zum Aufbringen der negativen Elektrode auf den auf den Stapeltisch zugeführten Separator,
wobei eine Spannung des Separators vor und nach der Zuführwalze variiert wird, was als Spannungsschnitt definiert ist,
wobei die Formmaschine umfasst:
eine erste Formmaschine (91), die neben einer Oberfläche des Separators angeordnet ist; und
eine zweite Formmaschine (92), die neben einer gegenüberliegenden Oberfläche des Separators angeordnet ist,
wobei sowohl die erste als auch die zweite Formmaschine umfasst:
einen rotierenden Körper (93);
einen Motor (94) zum Drehen des rotierenden Körpers;
einen Formkörper (95), der an einer Oberfläche des rotierenden Körpers angeordnet ist und einen daran ausgebildeten Vorsprung (95a) aufweist; und
einen Aufnahmekörper (96), der auf einer anderen Oberfläche des rotierenden Körpers angeordnet ist,
wobei die Formmaschine einen ersten Modus ausführt, in dem der Formkörper der ersten Formmaschine und der Aufnahmekörper der zweiten Formmaschine dem Separator zugewandt sind und der Formkörper der ersten Formmaschine mit dem Separator in Kontakt kommt, sowie einen zweiten Modus, in dem der Aufnahmekörper der ersten Formmaschine und der Formkörper der zweiten Formmaschine dem Separator zugewandt sind und der Formkörper der zweiten Formmaschine mit dem Separator in Kontakt kommt.

2. Vorrichtung nach Anspruch 1, wobei die Formmaschine umfasst:
einen ersten Zylinder (97) zum Bewegen der ersten Formmaschine in einer Richtung senkrecht zu einer Bewegungsrichtung des Separators; und
einen zweiten Zylinder (98) zum Bewegen der zweiten Formmaschine in einer Richtung senkrecht zur Bewegungsrichtung des Separators.

3. Vorrichtung nach Anspruch 1, ferner umfassend:
einen Kathodenausrichttisch (41), auf dem die positive Elektrode platziert wird;
einen Anodenausrichttisch (42), auf dem die negative Elektrode platziert wird; und
einen Stapeltisch-Bewegungsmechanismus (50) zum abwechselnden Ausführen eines ersten Vorgangs, bei dem der Stapeltisch von einer ersten Position zu einer zweiten Position bewegt wird, und eines zweiten Vorgangs, bei dem der Stapeltisch von der zweiten Position zur ersten Position bewegt wird,
wobei die erste Position näher am Anodenausrichttisch des Kathodenausrichttischs und des Anodenausrichttischs liegt, und
wobei die zweite Position näher am Kathodenausrichttisch als am Anodenausrichttisch liegt.

4. Vorrichtung nach Anspruch 3, wobei die Zuführwalze im ersten Vorgang und im zweiten Vorgang angetrieben wird.

5. Vorrichtung nach Anspruch 3, wobei die Zuführwalze oberhalb eines Raums zwischen der ersten Position und der zweiten Position angeordnet ist.

6. Vorrichtung nach Anspruch 1, ferner umfassend:
einen unteren Hebemechanismus (56) zum Anheben des Stapeltisches.

7. Vorrichtung nach Anspruch 6, wobei der untere Hebemechanismus den Stapeltisch um eine Summe aus einer Dicke der positiven Elektrode oder einer Dicke der negativen Elektrode und einer Dicke des Separators nach unten bewegt.

8. Vorrichtung nach Anspruch 1, ferner umfassend:
einen oberen Hebemechanismus (120) zum Anheben der Formmaschine und der Zuführwalze.

## Revendications

1. Appareil permettant d'empiler une batterie rechargeable pour la fabrication d'une cellule empilée comprenant une électrode positive et une électrode négative disposées en alternance, tandis qu'un séparateur (4) est intercalé entre l'électrode positive (2) et l'électrode négative (3),
l'appareil comprenant:
une table d'empilement (40);
une machine de formage (90) destinée à former le séparateur;
un rouleau d'amenée (100) destiné à découper sous tension le séparateur formés par la machine de formage et à acheminer la quantité requise de séparateurs vers la table d'empilement;
un premier robot (70) permettant de placer l'électrode positive sur le séparateur placé sur la table d'empilement; et
un deuxième robot (80) permettant de placer l'électrode négative sur le séparateur placé sur la table d'empilement; et
dans lequel la tension du séparateur est modifiée avant et après le rouleau d'amenée,
qui est définie comme une coupe sous tension,
dans laquelle la machine de formage comprend:
une première machine de formage (91) disposée à proximité d'une surface du séparateur; et
une deuxième machine de formage (92) disposée à proximité d'une surface en regard du
séparateur,
dans lequel chacune des première et deuxième machines de formage comprend:
un corps rotatif (93);
un moteur (94) faisant tourner le corps rotatif;
un corps de formage (95) disposé sur une surface du corps rotatif et sur lequel est pratiquée une saillie (95a); et
un corps de support (96) disposée sur une autre surface du corps rotatif,
dans lequel la machine de formage fonctionne selon un premier mode, dans lequel le corps de formage de la première machine de formage et le corps de support de la deuxième machine de formage sont tournés vers le séparateur, et le corps de formage de la première machine de formage est en contact avec le séparateur, et selon un deuxième mode, dans lequel le corps de support de la première machine de formage et le corps de formage de la deuxième machine de formage sont tournés vers le séparateur, et le corps de formage de la deuxième machine de formage est en contact avec le séparateur.

2. Appareil selon la revendication 1, dans lequel laquelle la machine de formage comprend:
un premier vérin (97) destiné à déplacer la première machine de formage dans une direction perpendiculaire à la direction de déplacement du séparateur; et
un deuxième vérin (98) destiné à déplacer la deuxième machine de formage dans une direction perpendiculaire à la direction de déplacement du séparateur.

3. Appareil selon la revendication 1, comprenant en outre:
une table d'alignement de cathode (41) sur laquelle est placée l'électrode positive;
une table d'alignement de cathode (42) sur laquelle est placée l'électrode négative; et
un mécanisme de déplacement de table d'empilement (50) destiné à effectuer alternativement une première opération consistant à déplacer la table d'empilement d'une première position vers une deuxième position et une deuxième opération consistant à déplacer la table d'empilement de la deuxième position vers la première position,
dans lequel la première position est plus proche de la table d'alignement d'anode de la table d'alignement de cathode et de la table d'alignement d'anode, et
dans lequel la deuxième position est plus proche de la table d'alignement de la table de cathode et de la table d'alignement d'anode.

4. Appareil selon la revendication 3, dans lequel le rouleau d'amenée est entraîné lors de la première opération et de la deuxième opération.

5. Appareil selon la revendication 3, dans lequel le rouleau d'amenée est disposé au-dessus d'un espace entre la première position et la deuxième position.

6. Appareil selon la revendication 1, comprenant en outre:
un mécanisme de levage inférieur (56) destiné à soulever la table d'empilement.

7. Appareil selon la revendication 6, dans lequel le mécanisme de levage inférieur descend le long de la table d'empilement d'une distance égale à la somme de l'épaisseur de l'électrode positive ou de l'épaisseur de l'électrode négative et de l'épaisseur du séparateur.

8. Appareil selon la revendication 1, comprenant en outre:
un mécanisme de levage supérieur (120) permettant de lever la machine de formage et le rouleau d'amenée.
